# EUROPÄISCHE PATENTANMELDUNG

(11) **EP 4 840 568 A1**
(43) Veröffentlichungstag der Anmeldung: **18.11.2026**
(21) Anmeldenummer: 26174663.0
(22) Anmeldetag: 27.04.2026
(51) Int. Cl.: B23D 45/10, B23D 45/00, B23D 47/08, B27B 5/00

(54) **SÄGEEINRICHTUNG, KANTENBEARBEITUNGSVORRICHTUNG UND VERFAHREN ZUM BEARBEITEN EINES KANTENBANDES**

(30) Priorität: 15.05.2025 DE 202025102698 U
(71) Anmelder: IMA Schelling Deutschland GmbH, 32312 Lübbecke (DE)
(72) Erfinder: Kampeter, Sebastian, 32609 Hüllhorst (DE); Schürmann, Ralf, 32351 Stemwede (DE)
(74) Vertreter: Schober, Mirko

(57) **Zusammenfassung**

Die Sägeeinrichtung (4) weist wenigstens ein erstes Sägeblatt (41a) und ein zweites Sägeblatt (41b) auf, welche auf einem gemeinsamen, verlagerbaren, insbesondere verschieblichen und/ oder drehbaren, Träger (47) gelagert sind. Die Sägeeinrichtung (4) weist einen Sägeblattantrieb (48) auf, der durch Verlagern des gemeinsamen Trägers (42), bevorzugt über eine zwischengeschaltete Kupplungsanordnung (46e; 47a, 47b), wahlweise mit dem ersten Sägeblatt (41a) oder dem zweiten Sägeblatt (41b) koppelbar ist.

## Beschreibung

Die Erfindung betrifft eine Sägeeinrichtung sowie eine Kantenbearbeitungsvorrichtung und ein Verfahren zum Bearbeiten eines Kantenbandes.

Kantenbearbeitungsvorrichtungen sind beispielsweise aus EP 4015172 A1 bekannt.

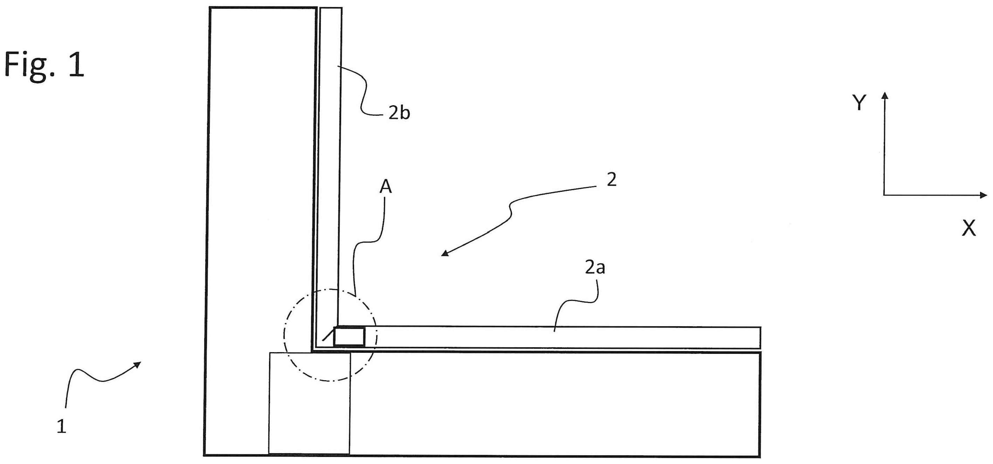

Diese dienen in der Regel (vgl. Figur 1) der Beschichtung von Innenecken A an Werkstücken 1, indem ein Kantenband 2 an den Schmalseiten des Werkstücks 1 angelegt und ein erster Abschnitt 2a des Kantenbandes 2 an einer ersten Schmalseite und ein zweiter Abschnitt 2b des Kantenbandes 2 an einer zweiten Schmalseite des Werkstücks 1 angebracht wird. Im Bereich der Ecke A muss das Kantenband 2 in der Regel geschwächt werden, damit es sauber in die Ecke A gedrückt werden kann. Hierzu wird in der Regel eine Säge eingesetzt, um das Kantenband 2 an entsprechender Stelle zu schwächen. Die Richtung X bezeichnet allgemein eine erste laterale Erstreckungsrichtung einer Schmalseite des Werkstücks 1. Y ist eine dazu senkrecht verlaufende Erstreckungsrichtung des Werkstücks 1.

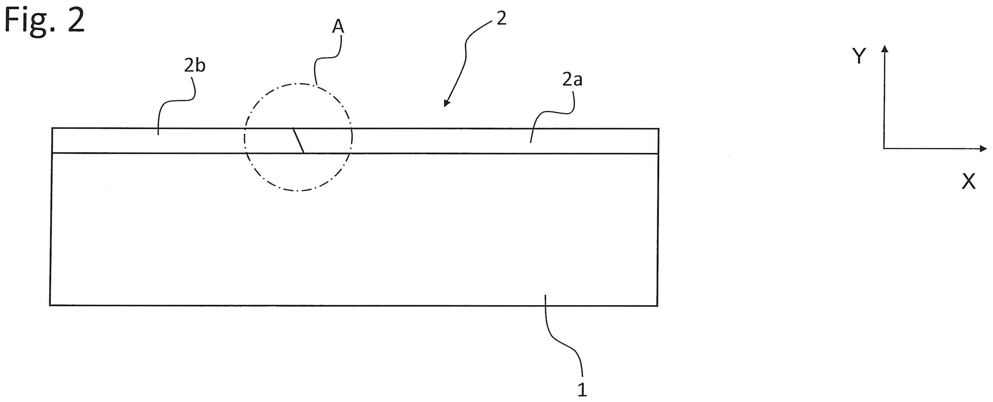

Gerade bei ein Werkstück 1 umlaufenden Kanten (vgl. Figur 2) entsteht das Problem der Stoßverleimung. Hier treffen zwei Enden derselben oder unterschiedlicher Kantenbänder aufeinander. Um dies bewerkstelligen zu können, sind in der Regel Sägen erforderlich, die einen - in der Regel schrägen - Sägeschnitt erzeugen, sodass bei Fertigstellung eines Stoßes (vgl. Detail C in Figur 2) die Enden sich gegenseitig überlappen und dadurch nach Möglichkeit keine bis auf Werkstück 1 herunterreichende Fuge entsteht. Soll beispielsweise eine Außenecke eines Werkstücks 1 mit einem Kantenband 2 beschichtet werden, empfiehlt es sich ebenfalls, das Kantenband 2 vollständig zu durchtrennen.

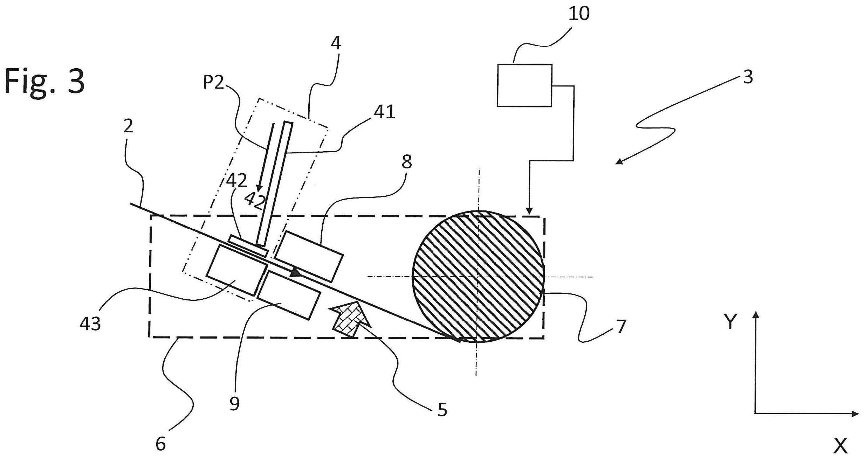

In Figur 3 ist eine typische Kantenbearbeitungsvorrichtung 3 gezeigt. In der Regel handelt es sich dabei um eine Andruckeinrichtung, bei der an einem Träger 6 ein Andruckelement 7 (oder mehrere) sowie eine Zuführung 8, 9 für das Kantenband 2 sowie eine Sägeeinrichtung 4 angeordnet sind. Ein zugeführtes Kantenband 2 wird gemäß dem Befehl einer Steuerung (hier nicht gezeigt) mittels der Sägeeinrichtung 4 durch Zustellen des Sägeblatts 41 an das Kantenband 2 (Richtung P2) eingeschnitten oder durchtrennt. 42 bezeichnet ein Klemmelement, welches das Kantenband 2 zur Ausführung des Schnitts durch das Sägeblatt 41 gegen eine Unterlage 43 drückt, damit das Kantenband 2 bei Ausführung des Sägeschnitts nicht verrutscht. Gegebenenfalls können am Träger 6 noch weitere Einrichtungen vorhanden sein, beispielsweise eine Haftmittelauftrags- oder Aktivierungseinrichtung 5 oder dergleichen. Die Haftmittelauftrags- oder Aktivierungseinrichtung 5 kann zum Beispiel eine Kleberangabe oder einen Laser, eine Heißluftquelle, eine Plasmaquelle, eine Mikrowellenquelle, oder eine Induktionsquelle umfassen. 10 bezeichnet eine Steuerung, die dazu ausgelegt ist, die Kantenbearbeitungsvorrichtung 3 zu steuern und mit dieser zu kommunizieren. Die Steuerung 10 kann am Träger 6 angeordnet sein, kann aber auch Teil einer Steuerung einer größeren Maschineneinheit und daher entfernt vom Träger 6 angeordnet sein.

Nachteilig an den bisherigen Kantenbearbeitungsvorrichtungen ist jedoch, dass unterschiedliche Aggregate eingesetzt werden müssen, um - je nach Anwendung - das Kantenband zu durchschneiden oder lediglich zu schwächen. Hierdurch entstehen zusätzliche Kosten und es ist zusätzlicher Bauraum erforderlich.

Aufgabe der vorliegenden Erfindung ist es, eine Sägeeinrichtung und eine Kantenbearbeitungsvorrichtung dahingehend weiterzuentwickeln, dass die erwähnten Nachteile vermieden werden.

Gelöst wird diese Aufgabe durch eine Sägeeinrichtung mit den Merkmalen des Anspruchs 1, eine Kantenbearbeitungsvorrichtung mit den Merkmalen des Anspruchs 11 und ein Verfahren zum Bearbeiten eines Kantenbandes mit den Merkmalen des Anspruchs 14. Vorteilhafte Ausführungsformen finden sich in den Unteransprüchen.

Die erfindungsgemäße Sägeeinrichtung weist hierzu wenigstens ein erstes Sägeblatt und ein zweites Sägeblatt auf. Diese Sägeblätter sind auf einem gemeinsamen, verlagerbaren, insbesondere verschieblichen und/oder drehbaren, Träger gelagert.

Dabei ist besonders vorteilhaft, dass das erste Sägeblatt und das zweite Sägeblatt dauerhaft an demselben gemeinsamen Träger angeordnet sind. Die Auswahl des jeweils verwendeten Sägeblatts erfolgt somit innerhalb eines einzigen Sägeaggregats durch Verlagerung des gemeinsamen Trägers. Ein Austausch eines Bearbeitungswerkzeugs oder ein Koppeln wechselweise eingesetzter, voneinander getrennter Werkzeuge an eine Werkzeugaufnahme ist hierfür nicht erforderlich.

Dabei weist die Sägeeinrichtung einen Sägeblattantrieb auf, der durch Verlagern des gemeinsamen Trägers, bevorzugt über eine zwischengeschaltete Kupplungsanordnung, wahlweise mit dem ersten Sägeblatt oder dem zweiten Sägeblatt koppelbar ist.

So ist es möglich, je nach Anwendungsfall des Einschneidens bzw. des Trennschnitts das richtige Sägeblatt auszuwählen und aus einer Nichtgebrauchsstellung in eine Gebrauchsstellung zu überführen. Unter einer Gebrauchsstellung wird dabei insbesondere eine Stellung des jeweiligen Sägeblatts verstanden, in der dieses relativ zu dem Kantenband so angeordnet ist, dass es zum Ausführen des vorgesehenen Schnitts antreibbar und an das Kantenband zustellbar ist. Das jeweils andere Sägeblatt befindet sich dabei bevorzugt in einer Nichtgebrauchsstellung außerhalb eines Wirkbereichs des Kantenbandes. Mittels der Kupplungsanordnung kann das Wechseln des Sägeblatts dabei relativ schnell erfolgen. Dabei kann die Verlagerung des gemeinsamen Trägers die Kopplung zwischen dem Sägeblattantrieb und dem ausgewählten Sägeblatt unmittelbar bewirken. Alternativ ist es möglich, dass durch die Verlagerung des gemeinsamen Trägers zunächst eine Koppelstellung hergestellt wird, in der anschließend durch eine weitere, insbesondere kurze Zustellbewegung oder Aktivierungsbewegung die drehmomentübertragende Kopplung erfolgt. Die Kupplungsanordnung kann dabei so ausgestaltet sein, dass ihre Funktion im Wesentlichen in der drehmomentübertragenden Kopplung des ausgewählten Sägeblatts mit dem Sägeblattantrieb besteht. Eine gesonderte, dem Werkzeugwechsel vorgeschaltete Ausrichtung voneinander getrennter Werkzeugkomponenten ist hierfür nicht zwingend erforderlich. Bevorzugt umfasst die Kupplungsanordnung eine Magnetkupplung. Die Kupplungsanordnung kann unabhängig von ihrer konkreten Ausgestaltung dazu dienen, das jeweils in der Gebrauchsstellung befindliche Sägeblatt drehmomentübertragend mit dem Sägeblattantrieb zu verbinden. Hierfür kommen insbesondere magnetische, formschlüssige, kraftschlüssige und/ oder reibschlüssige Kupplungsanordnungen in Betracht. Die Erfindung ist insoweit nicht auf eine bestimmte Art der Kupplungsanordnung beschränkt. Die Kupplungsanordnung dient vorzugsweise nicht dem Austausch eines Bearbeitungswerkzeugs, sondern der wahlweisen Aktivierung desjenigen Sägeblatts, das sich nach der Verlagerung des gemeinsamen Trägers in der Gebrauchsposition befindet. Die Kupplungsanordnung kann insbesondere so ausgebildet sein, dass bei einer Verlagerung des gemeinsamen Trägers die Kopplung mit dem in Gebrauchsposition befindlichen Sägeblatt hergestellt und die Kopplung mit dem anderen Sägeblatt gelöst wird. Grundsätzlich können auf diese Weise auch Sägeblätter mit verschiedenen Schneiden eingesetzt werden, um die erforderlichen Geometrien der Schnitte zu ermöglichen. Beispielsweise kann für einen Trennschnitt ein vergleichsweise dünnes Sägeblatt verwendet werden, welches verhältnismäßig wenig Späne erzeugt, während für einen Einschnitt ein demgegenüber stärkeres Sägeblatt mit einem anderen Schneidenprofil verwendet werden kann. Das erste und das zweite Sägeblatt können sich insbesondere hinsichtlich ihres Durchmessers, ihrer Schnittbreite, ihrer Zahnung und/oder ihres Schneidenprofils unterscheiden. Bevorzugt ist eines der Sägeblätter zum vollständigen Durchtrennen des Kantenbandes ausgelegt, während das andere Sägeblatt zum Einschneiden des Kantenbandes bis auf eine vorgegebene Restdicke ausgelegt ist.

Insgesamt ist die erfindungsgemäße Sägeeinrichtung daher geeignet, relativ kompakt und mit relativ wenig Bauraum unterschiedliche Arbeitsgänge mit ein und demselben Aggregat auszuführen. Dies beruht insbesondere darauf, dass die Umschaltung zwischen den unterschiedlichen Schnittfunktionen durch eine interne Verlagerung des gemeinsamen Trägers innerhalb des Aggregats erfolgt. Gegenüber Lösungen, bei denen unterschiedliche Werkzeuge einer Maschine wechselweise zugeführt oder an diese angekoppelt werden, kann hierdurch eine konstruktiv einfache und platzsparende Ausführung erreicht werden.

Zur Verlagerung der Sägeeinrichtung und dem Wechsel der Sägeblätter können unterschiedliche Mechaniken eingesetzt werden.

Nach einer bevorzugten Ausführungsform der erfindungsgemäßen Sägeeinrichtung ist vorgesehen, dass sie einen Verlagerungsantrieb, insbesondere Servoantrieb, zur Verlagerung, insbesondere Drehung um eine erste Drehachse, des gemeinsamen Trägers aufweist. Auf diese Weise kann der gemeinsame Träger so gedreht werden, dass eines der Sägeblätter in eine Gebrauchsposition, das andere in einer Nichtgebrauchsposition verlagert wird. Wird ein Servoantrieb eingesetzt, kann dieser auch dazu verwendet werden, eine Zustellbewegung oder Schnittbewegung des Sägeblattes in der Gebrauchsposition zu bewirken.

In einer bevorzugten Ausführungsform bewirkt die Verlagerung des gemeinsamen Trägers nicht nur das Überführen eines der Sägeblätter in die Gebrauchsposition, sondern zugleich die Herstellung einer wirksamen Kopplung zwischen dem Sägeblattantrieb und diesem Sägeblatt. Auf diese Weise kann mit einer einzigen Verlagerungsbewegung sowohl die Auswahl als auch die Aktivierung des jeweiligen Sägeblatts erfolgen.

Durch Schwenken des Trägers und gleichzeitiges Antreiben des Sägeblattes kann auf diese Weise ein Einschnitt oder Trennschnitt am Kantenband ausgeführt werden. Werden Magnetkupplungen eingesetzt, so ist es möglich, die Schnittbewegung durch Drehen des Trägers trotz der Magnetkupplung auszuführen, ohne die Kopplung zwischen dem betreffenden Sägeblatt und dem das Sägeblatt antreibenden Antrieb zu verlieren.

Die Schnittbewegung kann aber beispielsweise auch durch eine Linearverschiebung erfolgen. So kann beispielsweise vorgesehen sein, dass der gemeinsame Träger seinerseits auf einem entlang einer Führung verschieblich geführten Schlitten, insbesondere verlagerbar, angeordnet ist. Der gemeinsame Träger kann somit durch eine Drehbewegung, durch eine Linearbewegung oder durch eine Kombination aus Dreh- und Linearbewegung in die jeweilige Gebrauchsstellung überführt werden. Die Erfindung ist insoweit nicht auf eine bestimmte Kinematik des Trägers beschränkt. Auf diese Weise können die Sägeblätter auf dem Träger in der Gebrauchsstellung verfahren werden, sodass eine Schnittbewegung von einer Längsseite des Kantenbandes zu einer anderen Längsseite des Kantenbandes ausgeführt werden kann. Bevorzugt ist der Sägeblattantrieb hierbei an dem Schlitten angeordnet.

Weiter kann die Sägeeinrichtung einen Schlittenantrieb zur Verschiebung des Schlittens umfassen, mit dessen Hilfe beispielsweise die oben beschriebene Schnittbewegung durchgeführt wird.

Die oben angesprochene Führung kann durch wenigstens einen Endanschlag für den Schlitten begrenzt sein. Diese Endanschläge können mechanische Anschläge sein, gegen welche der Schlitten fährt, oder durch Endstellungen des zugehörigen Antriebs realisiert sein.

Bevorzugt sind die Sägeblätter am Träger so gelagert, dass das erste Sägeblatt um eine zweite Drehachse und das zweite Sägeblatt um eine dritte Drehachse drehbar ist. Die Drehachsen der Sägeblätter und des Trägers verlaufen bevorzugt parallel zueinander.

Die Anordnung der Sägeblätter am Träger kann je nach Größe der Sägeblätter und des zur Verfügung stehenden Bauraums unterschiedlich sein. Bevorzugt liegen Ebenen der Sägeblätter in Richtung ihrer Drehachsen bündig zueinander oder sind versetzt. Gerade bei der letzten Ausführung ist es möglich, größere Sägeblätter platzsparend in Richtung ihrer Drehachsen hintereinander anzuordnen.

Die Erfindung betrifft ferner eine Kantenbearbeitungsvorrichtung zum Bearbeiten von Kantenbändern mit einer Steuerung sowie einer Andruckeinrichtung zum Andrücken eines Kantenbandes an die Schmalseite eines Werkstücks. Die Kantenbear-beitungsvorrichtung weist weiter eine Kantenbandführung einer oben beschriebenen Sägeeinrichtung auf, welche vor der Andruckeinrichtung angeordnet und so durch eine Steuerung ansteuerbar ist, dass sie das Kantenband wahlweise bis auf eine vorgegebene Tiefe einschneiden oder vollständig durchtrennen kann. Gerade bei der Bearbeitung von Kantenbändern ist es vorteilhaft, wenn innerhalb eines einzigen Aggregats wahlweise ein Trennschnitt oder ein Einschnitt mit begrenzter Schnitttiefe ausgeführt werden kann. Die erfindungsgemäße Ausbildung mit zwei auf demselben Träger angeordneten Sägeblättern ermöglicht dies in kompakter Weise.

Die erfindungsgemäße Sägeeinrichtung kann über die Steuerung so betätigt werden, dass sie sowohl Einschnitte zur Materialschwächung im Kantenband als auch Trennschnitte zum Durchtrennen des Kantenbandes durchführen kann. Je nach gewünschter Art des Schnittes wird das entsprechende Sägeblatt ausgewählt und durch die Steuerung durch Verlagern des Trägers in die Gebrauchsstellung verbracht bzw. an das Kantenband zugestellt. Die Auswahl des Sägeblatts kann dabei insbesondere in Abhängigkeit von Werkstückparametern, einem Bearbeitungsprogramm, einer vorgesehenen Schnittart, einer erkannten Innen- oder Außenecke, einer Stoßsituation und/oder einer gewünschten Schnitttiefe erfolgen.

Dabei kann vorgesehen sein, dass die Sägeeinrichtung Sägeblätter umfasst, welche so gelagert sind, dass sie von der Steuerung in Richtung auf das Kantenband hin oder vom Kantenband weg verlagerbar sind. Es sind hierzu lineare, aber auch andere Zustellbewegungen, wie z. B. Schwenkbewegungen, denk-bar.

Bevorzugt sind die Sägeblätter der Sägeeinrichtung weiter so gelagert, dass sie eine Schnittebene im Kantenband erzeugen können, die Schrägschnitte ermöglicht, die dann beispielsweise beim Stoßen von Kantenbandenden sichtbare Fugen verkleinert oder durch Überlappung der Kantenbandenden überdeckt.

Grundsätzlich kann vorgesehen sein, dass die Sägeeinrichtung eine Sägeunterlage zur Auflage des Kantenbandes beim Sägen sowie ein Klemmelement zum Andrücken des Kantenbandes gegen die Sägeunterlage aufweist. Auf diese Weise wird ein Sägeschnitt sicher durchgeführt und das Kantenband kann bei Berührung mit dem Sägeblatt nicht verrutschen. Vorteilhafterweise kann auch vorgesehen sein, dass das Klemmelement eine erste Aussparung zum Durchführen wenigstens der Schneide eines oder jedes Sägeblatts umfasst. Weiter ist alternativ oder ergänzend hierzu möglich, dass die Sägeunterlage ein durch das Sägeblatt schneidbares Material und/oder eine zweite Aussparung umfasst, in die wenigstens ein Teil des jeweiligen Sägeblatts beim Durchtrennen des Kantenbandes eintreten kann. Im ersten Fall, in welchem die Sägeunterlage selbst durch das jeweilige Sägeblatt einschneidbar ist, kann diese Sägeunterlage bei Verschleiß ausgetauscht werden. Bei der Ausbildung der oben genannten zweiten Alternative ist es möglich, dass die Sägeunterlage verhältnismäßig verschleißfrei ausgebildet sein kann.

Nach einer bevorzugten Ausführungsform kann das Klemmelement selbst verlagerbar sein. Dies ermöglicht ein Mitlaufen mit dem vorgeschobenen Kantenband oder beispielsweise senkrecht dazu.

In einer Ausführungsform kann das Klemmelement daher in einer Zustellrichtung in Richtung auf das Kantenband hin oder von diesem weg verlagerbar ausgebildet sein. Bei einer weiteren Ausführungsform der vorliegenden Erfindung kann das Klemmelement so ausgebildet sein, dass es parallel zur Zuführvorrichtung des Kantenbandes verlagerbar ausgebildet ist. Kombinationen dieser Ausführungsform sind natürlich ebenfalls möglich.

Weiter kann vorgesehen sein, dass die Andruckeinrichtung, die Kantenbandführung und die Sägeeinrichtung an einem gemeinsamen Träger angeordnet sind. Der Träger selbst kann manipulierbar, d. h. drehbar oder verschieblich, ausgebildet sein. Insgesamt ermöglicht die Anordnung an einem Träger die Schaffung einer besonders kompakten Einheit, die sich dann in der Nähe der Fügezone zwischen Kantenband und Werkstück mithilfe der Steuerung positionieren lässt. Die Steuerung selbst kann Teil der am Träger montierten Einheit sein, kann aber auch eine allgemeine Maschinensteuerung sein, die an anderer Stelle einer Kantenverarbeitungsmaschine angeordnet ist.

In einer bevorzugten Ausführungsform ist vorgesehen, dass die Verlagerung eines gemeinsamen Trägers zugleich die Kopplung eines Sägeblattantriebs mit dem jeweils in einer Gebrauchsstellung befindlichen Sägeblatt bewirkt.

Weiterhin kann vorgesehen sein, dass ein erstes Sägeblatt zum vollständigen Durchtrennen eines Kantenbandes und ein zweites Sägeblatt zum Einschneiden des Kantenbandes bis auf eine vorgegebene Tiefe ausgelegt ist.

Die Erfindung betrifft zudem ein Verfahren zum Bearbeiten eines Kantenbandes mittels einer oben beschriebenen Sägeeinrichtung bzw. mittels einer eine solche Sägeeinrichtung aufweisenden Kantenbearbeitungsvorrichtung. Bei dem erfindungsgemäßen Verfahren wird bevorzugt abhängig von der vorgesehenen Schnittart eines der auf dem gemeinsamen Träger angeordneten Sägeblätter ausgewählt, der gemeinsame Träger so verlagert, dass das ausgewählte Sägeblatt in eine Gebrauchsstellung gelangt, der Sägeblattantrieb mit dem ausgewählten Sägeblatt gekoppelt und anschließend ein Einschnitt oder ein Trennschnitt an dem Kantenband ausgeführt.

Ein erfindungsgemäßes Verfahren weist folgende Schritte auf:
- Bereitstellen eines Kantenbandes,
- Bereitstellen eines Werkstücks mit einer mit dem Kantenband zu beschichtenden Schmalseite,
- Zuführen des Kantenbandes und des Werkstücks zu der Kantenbearbeitungsvorrichtung,
- Entscheiden durch eine Steuerung, ob eine Bekantung einer Innenecke, einer Außenecke oder ein Stoßschnitt ausgeführt werden soll,
- Auswählen eines ersten Sägeblatts oder eines zweiten Sägeblatts in Abhängigkeit von der vorgesehenen Bearbeitung,
- Verlagern eines gemeinsamen Trägers, auf dem das erste Sägeblatt und das zweite Sägeblatt angeordnet sind, sodass das ausgewählte Sägeblatt in eine Gebrauchsstellung gelangt, und
- Einschneiden oder Durchtrennen des Kantenbandes mittels des ausgewählten Sägeblatts.

Bevorzugt ist vorgesehen, dass für die Bekantung einer Außenecke oder für die Durchführung eines Stoßschnitts das erste Sägeblatt ausgewählt wird und für die Bekantung einer Innenecke das zweite Sägeblatt ausgewählt wird."

Die nachfolgend beschriebenen Verfahrensschritte stellen eine beispielhafte Ausgestaltung dar. Das vorstehend allgemein beschriebene Verfahren kann insbesondere unter Verwendung der oben beschriebenen Maschinensteuerung zum Betrieb einer Kantenbearbeitungsvorrichtung weiter konkretisiert werden. Ein beispielhafter Verfahrensablauf ist nachfolgend dargestellt:
a. Bereitstellen einer oben beschriebenen Kantenverarbeitungsvorrichtung (3);
b. Bereitstellen eines Kantenbandes (2);
c. Bereitstellen eines Werkstücks (1) mit einer mit dem Kantenband zu beschichtenden Schmalseite;
d. das Kantenband (2) und das Werkstück (1) werden der Kantenverabeitungsvorrichtung (3) zugeführt (S1)
e. die Steuerung (10) entscheidet anhand von vorgegebenen Informationen, ob eine Bekantung der Innenecke (A), der Außenecke (B) oder ein Stoßschnitt ausgeführt werden soll (S2), wobei für die Bekantung der Außenecke (B) oder die Durchführung eines Stoßschnitts das erste Sägeblatt (41a) in eine Gebrauchsposition verbracht wird oder sich in der Gebrauchsposition befindet, und wobei für die Bekantung der Innenecke (A) das zweite Sägeblatt (41b) in die Gebrauchsposition verbracht wird;
f. falls eine Bekantung der Außenecke (B) durchgeführt werden soll (S3), werden folgende Schritte ausgeführt:
   f1 die Sägeeinrichtung (4) wird mit der Schneide des ersten Sägeblattes (41a) in einem Winkel kleiner 90° zur Breitseite des Kantenbandes (2) positioniert (S31);
   f2 bevorzugt wird ein Klemmelement (42) parallel zur Sägeeinrichtung (4) verschoben (S32);
   f3 die Sägeeinrichtung (4) wird an einer Startposition relativ zum Kantenband (2) positioniert (S33);
   f4 bevorzugt hält das Klemmelement (42) das Kantenband (2) fest (S34);
   f5 das Kantenband (2) wird von der Sägeeinrichtung (4) mit dem ersten Sägeblatt (41a) vollständig durchtrennt (S35);
g. falls eine Bekantung der Innenecke (A) durchgeführt werden soll (S5), werden folgende Schritte ausgeführt:
   g1 die Sägeeinrichtung (4) wird mit der Schneide des zweiten Sägeblattes (41b) in einem Winkel kleiner 90° zur Breitseite des Kantenbandes (2) positioniert (S51);
   g2 bevorzugt wird ein Klemmelement (42) parallel zur Sägeeinrichtung (4) verschoben (S52);
   g3 die Sägeeinrichtung (4) wird an eine Startposition positioniert (S53);
   g4 bevorzugt hält das Klemmelement (42) das Kantenband fest (S54);
   g5 die Sägeeinrichtung (4) schneidet in das Material des Kantenbandes (2) mit dem zweiten Sägeblatt (41b) bis zu einer vorgegebenen Tiefe ein, ohne dieses durchzutrennen (S55, S56);
h. falls ein Stoßschnitt durchgeführt werden soll (S4), werden folgende Schritte ausgeführt:
   h1 die Sägeeinrichtung (4) wird mit der Schneide des ersten Sägeblattes (41a) in einem Winkel kleiner 90° zur Breitseite des Kantenbandes (2) positioniert (S41);
   h2 bevorzugt wird ein Klemmelement (42) parallel zur Sägeeinrichtung (4) verschoben (S42);
   h3 die Sägeeinrichtung (4) wird an einer Startposition relativ zum Kantenband (2) positioniert (S43);
   h4 bevorzugt hält das Klemmelement (42) das Kantenband (2) fest (S44);
   h5 das Kantenband (2) wird von dem ersten Sägeblatt (41a) der Sägeeinrichtung (4) vollständig durchtrennt (S45);
i. falls die vorgegebenen Informationen einen weiteren Bearbeitungsschritt vorsehen (S7), wird mit Schritt e. fortgefahren, andernfalls wird die Bearbeitung des Werkstücks beendet (S8).

Natürlich sind bei dem genannten Verfahren auch Varianten denkbar.

Bei den Schritten f3 bzw. g3 kann das erfindungsgemäße Verfahren umfassen, dass die Sägeeinrichtung mit ihrem ersten oder zweiten Sägeblatt, insbesondere wenn es sich um ein Kreissägeblatt handelt, etwa in der Mitte des Kantenbandes positioniert wird. In Vertikalrichtung würde das bei horizontalem Kantenband bedeuten, dass das Sägeblatt der Sägeeinrichtung mit seiner Ebene ebenfalls vertikal ausgerichtet ist, sodass der dem Kantenband am nächsten gelegene Punkt auf dem Rand bzw. der Schneide des betreffenden Sägeblattes in einem Bereich zwischen dem oberen Rand des Kantenbandes und dem unteren Rand des Kantenbandes, bevorzugt etwa mittig zwischen beiden Rändern positioniert wird. Von dort aus wird dann in Richtung des Kantenbandes das Durchschneiden des Kantenbandes in einem Folgeschritt vorgenommen. Alternativ ist es allerdings auch möglich, das Durchschneiden des Kantenbandes nicht mit einer Bewegung von einem Rand des Kantenbandes zum anderen durchzuführen, sondern durch eine Zustellbewegung der Sägeeinrichtung senkrecht zum Kantenband.

Insbesondere kann der Schritt h3 umfassen, dass die Sägeeinrichtung mit ihrem jeweiligen Sägeblatt, insbesondere wenn es sich um ein Kreissägeblatt handelt, vor dem Durchtrennen so positioniert wird, dass sie an einer Schneidposition auf einer Seite des Kantenbandes positioniert wird. Dies kann beispielsweise in Vertikalrichtung eine obere Schneidposition sein, die sich also am oberen Rand des horizontal verlaufenden Kantenbandes befindet. Genauso ist natürlich eine Positionierung am unteren Rand des horizontal verlaufenden Kantenbandes denkbar; das Kantenband wird dann beim Durchtrennen durch einen Sägeschnitt vom einen Rand des Kantenbandes zum anderen Rand des Kantenbandes geteilt.

Generell kann der Schnitt mit einem Sägeblatt aber auch durch den Antrieb für den Träger durchgeführt werden, wenn der Antrieb beispielsweise ein Servoantrieb ist. Dann würde das jeweilige Sägeblatt mit seiner Drehachse auf einer Kreisbahn geführt und schneidet so das Kantenband ein oder durch.

Die Erfindung wird nachfolgend anhand der Figuren 1 bis 14 näher erläutert.
Die Figuren 1 und 2 zeigen - wie bereits oben beschrieben - typische Situationen beim Anbringen eines Kantenbandes 2 auf einem Werkstück 1 im Bereich der Innenecke (Fig. 1) sowie im Bereich eines Stoßes (Fig. 2).
Figur 3 zeigt eine Draufsicht auf eine Kantenbearbeitungsvorrichtung nach dem Stand der Technik.
Figur 4 zeigt eine Draufsicht auf eine erfindungsgemäße Kantenbearbeitungsvorrichtung.
Figur 5 zeigt eine Seitenansicht (Betrachtungsrichtung entsprechend Pfeil C in Fig. 4) auf eine erfindungsgemäße Sägeeinrichtung mit einem ersten Sägeblatt in der Gebrauchsstellung in einer ersten Arbeitsposition.
Figur 6 zeigt die Ansicht aus Fig. 5 in einer zweiten Arbeitsposition.
Figur 7 zeigt die Ansicht aus Fig. 5 beim Wechseln des Sägeblatts.
Figur 8 zeigt die Seitenansicht auf die erfindungsgemäße Sägeeinrichtung mit einem zweiten Sägeblatt in der Gebrauchsstellung in einer ersten Arbeitsposition.
Figur 9 zeigt die Ansicht aus Fig. 8 in einer zweiten Arbeitsposition.
Figur 10 zeigt eine Draufsicht auf eine erfindungsgemäße Sägeeinrichtung, bei der sich das zweite Sägeblatt in der Gebrauchsstellung befindet.
Figur 11 zeigt eine Draufsicht auf ein Kantenband, welches mittels einer erfindungsgemäßen Sägeeinrichtung bearbeitet werden soll in einer Situation beim Einschneiden des Kantenbandes.
Figur 12 zeigt die Draufsicht aus Fig. 4 nach dem Einschneiden eines Kantenbandes mittels der Sägeeinrichtung.
Figur 13 zeigt eine zu den Fig. 11 und 12 vergleichbare Draufsicht beim Ausführen eines Trennschnitts.
Figur 14 zeigt die Situation aus Fig. 13 nach dem Durchführen eines Trennschnittes.

Die Fig. 1 bis 3 wurden bereits oben beschrieben, sodass zur Vermeidung von Wiederholungen auf die obigen Ausführungsformen verwiesen wird.

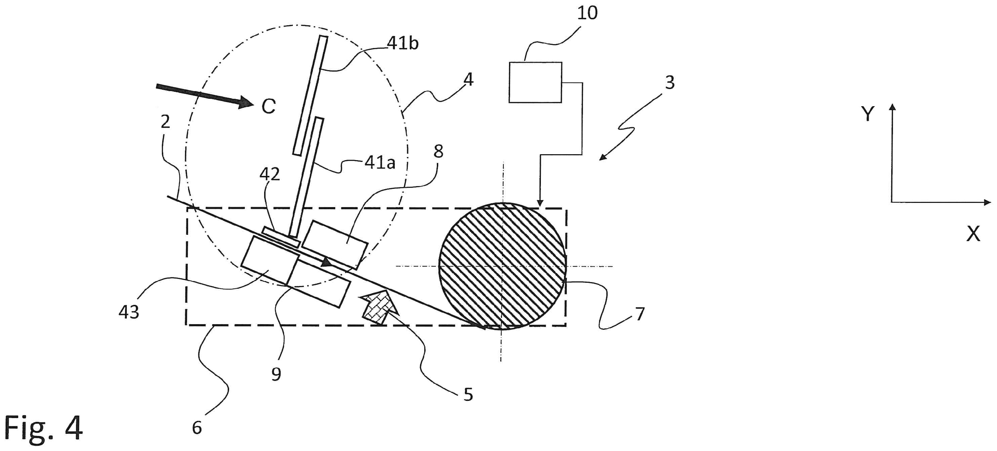

Im Unterschied zu Fig. 3 ist in Fig. 4 eine Kantenbearbeitungsvorrichtung 3 gezeigt, die eine erfindungsgemäße Sägeeinrichtung 4 umfasst. Diese unterscheidet sich von der Sägeeinrichtung 4 vom Stand der Technik dadurch, dass sie wenigstens zwei Sägeblätter 41a, 41b umfasst, welche über die Steuerung je nach Anforderung getauscht werden können. Je nachdem, wie die Steuerung 10 entscheidet, ob beispielsweise ein Trennschnitt am Kantenband 2 durchgeführt werden soll oder lediglich ein Einschnitt, werden die entsprechenden Sägeblätter 41a, 41b ausgewählt.

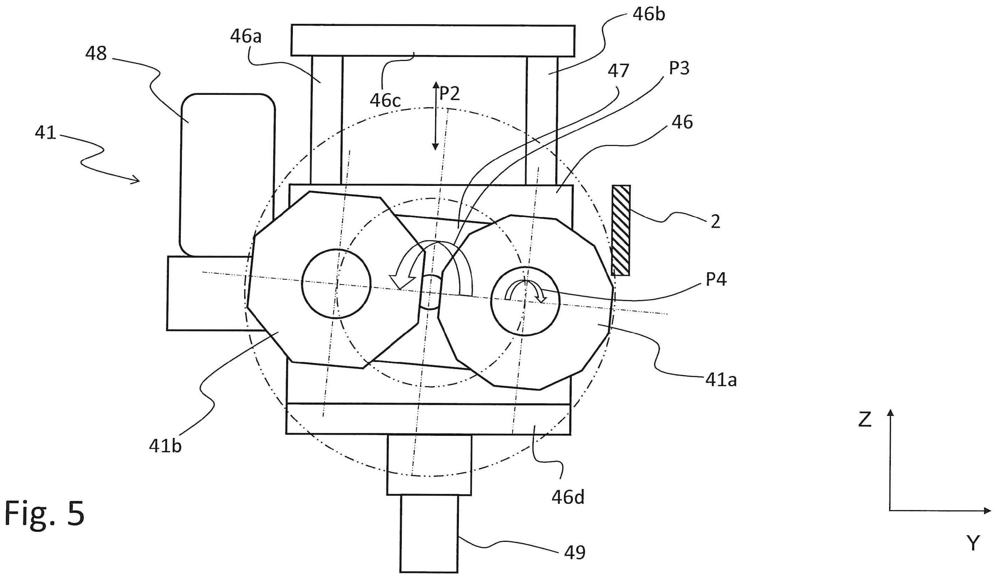

Dazu weist die erfindungsgemäße Sägeeinrichtung 4 eine Sägeblattanordnung 41 auf, die anhand der Fig. 5 bis 10 nachfolgend näher erläutert wird.

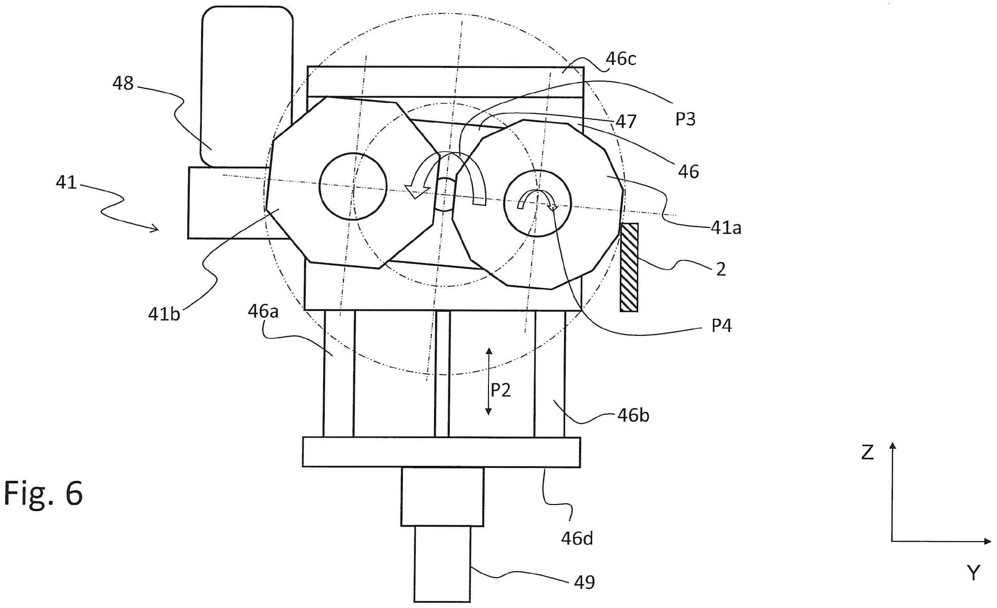

In der Fig. 5 ist die Sägeblattanordnung 41, welche Teil der Sägeeinrichtung 4 ist, dargestellt. Diese umfasst zunächst eine Mehrzahl Sägeblätter 41a, 41b, die bevorzugt verschiedene Dicken und/oder verschiedene Schneiden haben können. Diese Sägeblätter 41a, 41b sind auf einem gemeinsamen Träger 47 angeordnet und darauf drehbar gelagert. Der Träger 47 selbst ist bevorzugt drehbar auf einem Schlitten 46 gelagert. So können die auf dem Träger 47 gelagerten Sägeblätter 41a, 41b durch Drehen des Trägers 47 (Pfeilrichtung P3) aus einer Nichtgebrauchsstellung in eine Gebrauchsstellung verlagert werden. Bevorzugt geschieht dies drehbar, kann aber auch alternativ oder ergänzend durch Verschieben erfolgen. Die Gebrauchsstellung ist bevorzugt eine Stellung, in der das betreffende Sägeblatt (hier 41a) in der Nähe des durchzuschneidenden oder einzuschneidenden Kantenbands 2 angeordnet ist. Die bevorzugte Drehrichtung des in der Gebrauchsstellung befindlichen Sägeblattes 41a ist hier durch den Pfeil P4 angedeutet. Der Schlitten 46 kann zusätzlich in Pfeilrichtung p2 verschieblich an einer Führung 46a, 46b zwischen Endanschlägen 46c, 46d geführt sein. Die Verschiebung des Schlittens 46 wird durch einen Antrieb 49 über die Steuerung (10 - hier nicht gezeigt) initiiert. Beispielsweise kann bei einem drehenden Antrieb des in Gebrauchsstellung befindlichen Sägeblatts 41a der Schlitten 46 zwischen der in Fig. 5 dargestellten Stellung und der in Fig. 6 dargestellten Stellung parallel zur Raumrichtung Z verschoben werden, um das Kantenband 2 durchzuschneiden oder einzuschneiden. Denkbar ist auch alternativ oder ergänzend hierzu, dass die Schnittbewegung durch leichtes Verschwenken des Trägers 47 in Richtung des Pfeils P3 oder die Gegenrichtung erfolgt. Der Antrieb des Sägeblatts 41a in der Gebrauchsstellung erfolgt über den Antrieb 48, der ebenfalls an der Sägeblattanordnung 41 gelagert und über eine Kopplungseinrichtung, beispielsweise eine Magnetkupplung, mit dem in der Gebrauchsstellung befindlichen Sägeblatt 41a gekoppelt ist.

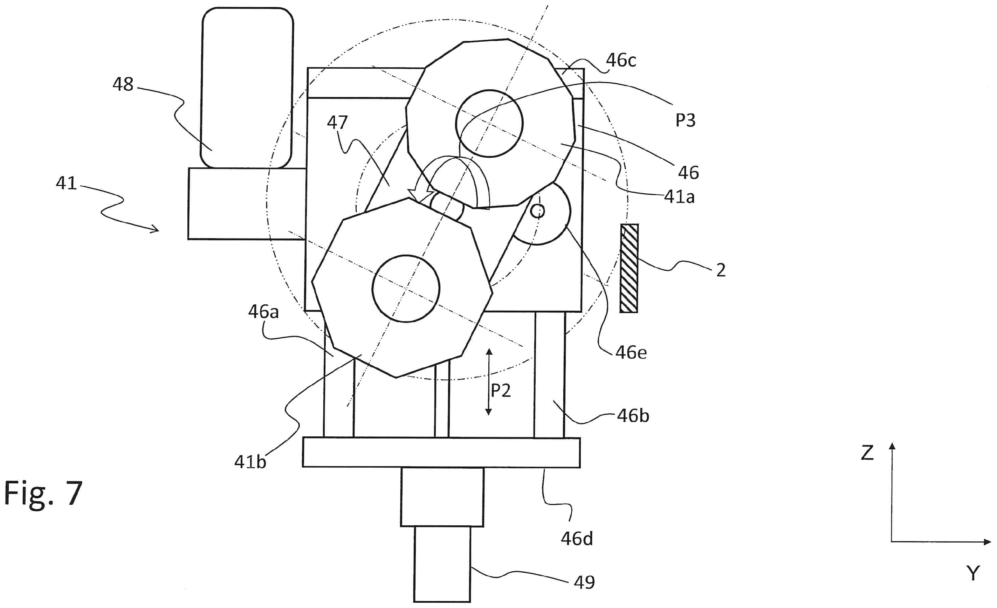

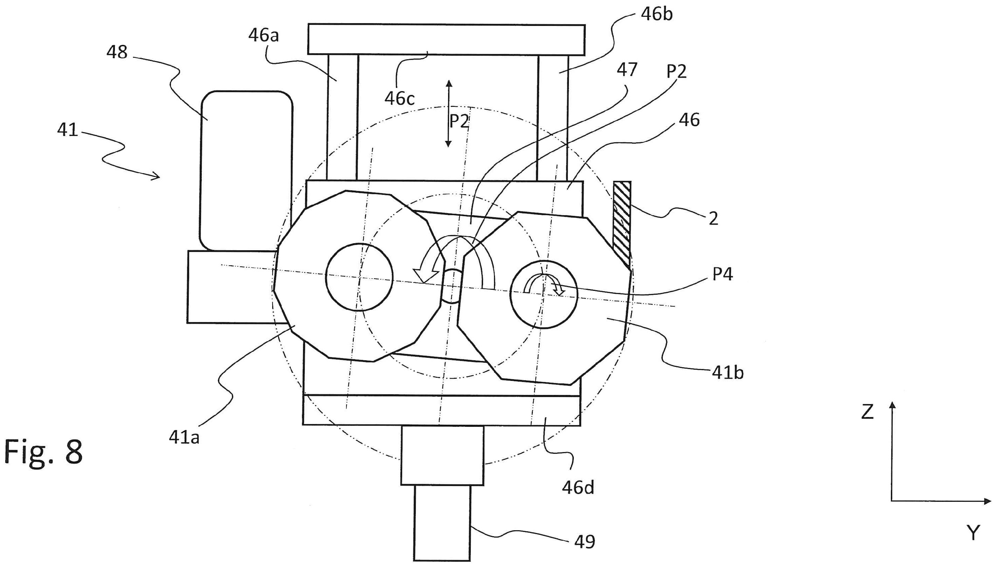

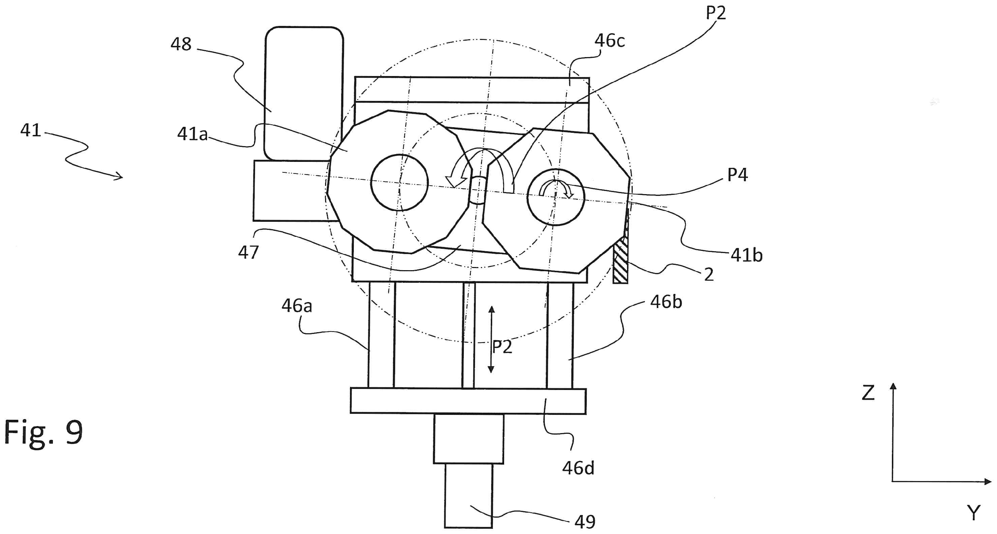

Je nach Verwendungszweck kann das Sägeblatt gewechselt werden, wie man insbesondere in Fig. 7 erkennt, wird dazu der Träger 47 in Richtung des Pfeils P3 (oder in Gegenrichtung) gedreht. Dadurch wird im gezeigten Beispiel das Sägeblatt 41a aus der Gebrauchsstellung heraus bewegt und das Sägeblatt 41b in die Gebrauchsstellung verbracht. Dabei wird das jeweilige Sägeblatt 41a, 41b mit dessen Antriebswelle mit einer entsprechenden Kupplung 46e am Schlitten 46 gekoppelt. Die Kupplung 46e ist dabei mit dem Antrieb 48 verbunden, sodass die Drehung des Antriebs 48 auf die Kupplung 46e und damit auf das damit in der Gebrauchsstellung gekoppelte Sägeblatt 41a bzw. 41b gekoppelt wird. Nach dem oben beschriebenen Wechsel des Sägeblatts 41b in die Gebrauchsstellung und des Sägeblatts 41a in die Nichtgebrauchsstellung ist die Situation der Fig. 8 erreicht. Das Sägeblatt 41b, welches bevorzugt in Pfeilrichtung P4 über den Antrieb 48 in Drehung versetzt wird, schneidet in das Kantenband 2 ein bzw. durchtrennt dieses, bevorzugt durch eine Bewegung des Schlittens 46 in Pfeilrichtung P2, sodass der Schlitten 46 die Position gemäß Fig. 9 einnimmt.

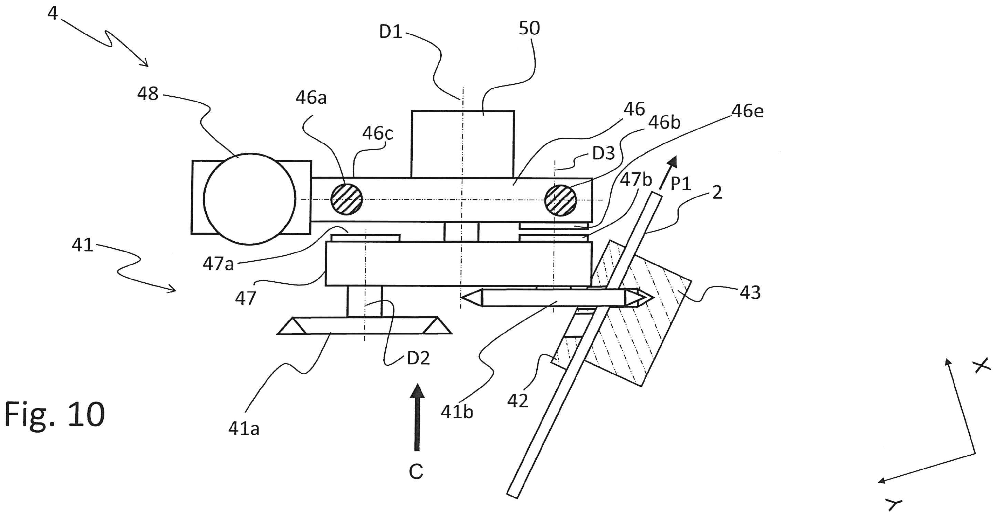

In Fig. 10 ist eine Draufsicht auf die erfindungsgemäße Sägeeinrichtung gezeigt. Die Sägeblattanordnung 41 wurde bereits mit Bezug auf die vorangegangenen Figuren beschrieben. Zu erwähnen ist hier lediglich, dass an dem Träger 47 auf der dem Schlitten 46 zugewandten Seite entsprechende Kupplungen 47a für das Sägeblatt 41a bzw. 47b für das Sägeblatt 41b dargestellt sind. Diese Kupplungen 47a, 47b werden beim Verbringen des entsprechenden Sägeblatts in die Gebrauchsstellung mit der Kupplung 46e am Schlitten 46 gekoppelt. Bevorzugt handelt es sich um Magnetkupplungen. Die Kupplungen übertragen die Antriebskraft des Antriebs 48 letztlich auf die Sägeblätter 41a bzw. 41b. Das Sägeblatt 41a ist dabei um eine Drehachse D2 drehbar am Träger 47 gelagert. Das Sägeblatt 41b ist seinerseits um eine Drehachse D3 drehbar am Träger 47 gelagert. Der Träger 47 selbst ist wiederum bevorzugt am Schlitten 46 drehbar gelagert, und zwar um eine Drehachse D1. Die Drehung des Trägers 47 relativ zum Schlitten 46 wird über einen Antrieb 50 bewirkt, welcher über die Steuerung 10 (vgl. Fig. 4) ebenso wie auch der Antrieb 48 oder der Antrieb 49 (vgl. Fig. 5 - 9) gesteuert wird.

Durch die Betätigung des Antriebs 48 sowie der Antriebe 49 oder 50 wird dann das Kantenband 2 durch das entsprechende in der Gebrauchsstellung befindliche Sägeblatt (hier 41b) entsprechend der Vorgabe der Steuerung 10 (Fig. 4) eingeschnitten oder durchtrennt.

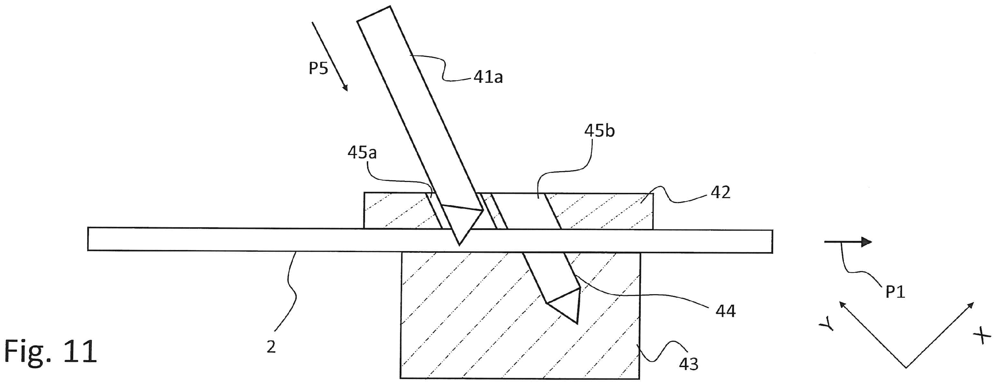

Diese Operation wird nachfolgend anhand der Fig. 11 bis 14 erläutert.

In den Fig. 11 bis 14 ist die Ausführung einer Einritzung bzw. eines Einschneidens für die Ausbildung und Anbringung eines Kantenbandes 2 an der Innenecke (vgl. Detail A in Fig. 1) dargestellt. Hierzu wird bevorzugt eine Kantenbearbeitungsvorrichtung 3 verwendet, wie sie mit Bezug auf Fig. 4 beschrieben worden ist.

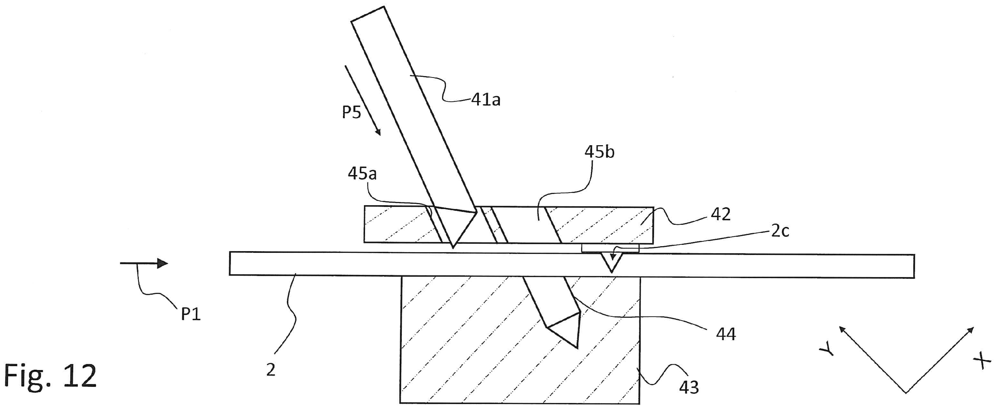

Zunächst wird das Kantenband 2 zugeführt (Transportrichtung P1), wobei es sich auf der Unterlage 43 abstützt. Die Unterlage kann eine Aussparung 44 enthalten, kann aber auch aus einem Material bestehen, in welches das in der Gebrauchsstellung befindliche Sägeblatt (hier 41a) einschneiden kann. Die Sägeeinrichtung (hier in Gestalt des Sägeblatts 41a) kann in einer Richtung P5 auf das Kantenband zubewegt oder hiervon weg bewegt werden. Das kann einerseits durch lineare Verlagerung, andererseits auch durch eine Drehbewegung (z. B. des Trägers 47) oder auch eine kombinierte Dreh- und Linearbewegung erfolgen. Im gezeigten Beispiel ist das Sägeblatt 41a relativ zum Kantenband 2 schräg angestellt, theoretisch ist aber auch eine senkrechte Ausrichtung (d. h. P5 verläuft senkrecht zu P1) zwischen Sägeblatt 41a und Kantenband 2 denkbar. Ist die Schnittposition am Kantenband 2 erreicht, wird das Klemmelement 42, welches seinerseits eine Öffnung oder Aussparung 45a für das Sägeblatt 41a und bevorzugt eine weitere Aussparung 45b für das andere Sägeblatt 41b (sofern die Sägeblätter 41a, 41b zueinander versetzt angeordnet sind) aufweist, über der Schnittposition positioniert, indem beispielsweise eine Verschiebung in Richtung auf das Kantenband 2 erfolgt, sodass dieses durch das Klemmelement 42 gegen die Unterlage 43 gedrückt wird (Fig. 11). Anschließend wird das Sägeblatt 41a durch die Aussparung oder Öffnung 45a hindurch geführt, wobei das Sägeblatt 41 das Kantenband 2 nicht vollständig durchtrennt, sondern lediglich bis zu einer von der Steuerung vorgegebenen Schnitttiefe in das Material des Kantenbandes 2 eintaucht, und beispielsweise in Richtung senkrecht zur Zeichenebene von einem Rand des Kantenbandes zum anderen Rand verfährt und so eine Rille oder ein Einschnitt 2c entsteht, Fig. 12.

Daran anschließend werden das Sägeblatt 41a und das Klemmelement 42 parallel zur Richtung P2 zurückgezogen (Fig. 12) und das Kantenband 2 wird in Richtung P1 weiter transportiert.

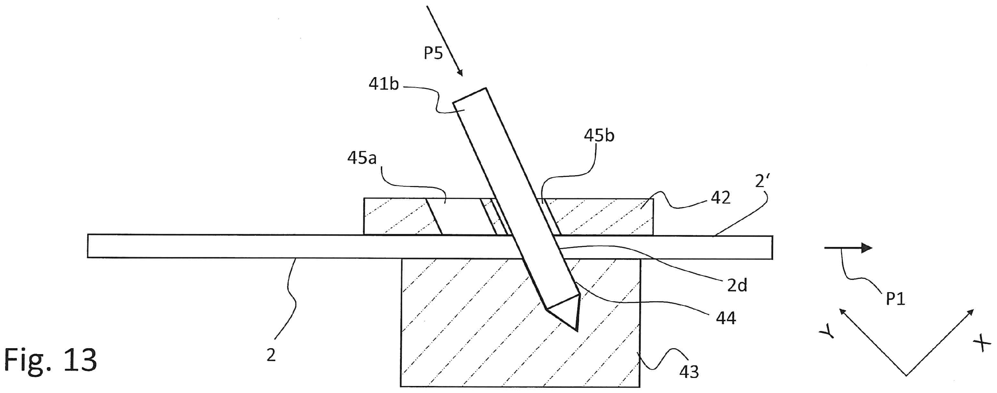

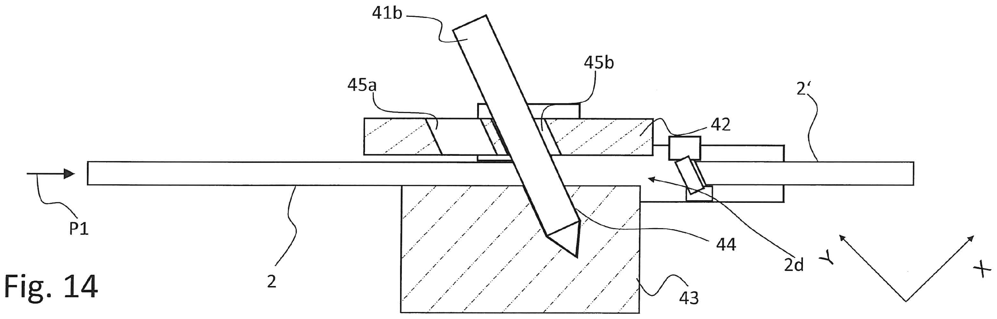

In den Fig. 13 und 14 ist beispielhaft eine Abbildungsfolge für einen entsprechenden Stoßschnitt dargestellt. Dazu wird das Sägeblatt 41a durch das Sägeblatt 41b ausgetauscht (vgl. die Beschreibung zu den Fig. 5 - 10). Das sich jetzt in der Gebrauchsstellung befindende Sägeblatt 41b befindet sich in einer Winkelstellung, sodass die Zustellung des Sägeblatts 41b in eine Raumrichtung P5 schräg zur Verlaufsrichtung P1 des Kantenbandes 2 erfolgt (Fig. 13). Es wird dann auch wieder das Klemmelement 42 gegen das Kantenband 2 gedrückt, sodass die Unterlage 43 und das Klemmelement 42 das Kantenband für den Trennschnitt fixiert halten. Sodann wird das Sägeblatt in Richtung P5 bewegt und das Kantenband wird an einer geeigneten Schneidposition durchtrennt (Fig. 13).

Wie man insbesondere in Fig. 14 erkennt, entstehen aus dem einen Kantenband zwei Kantenbandhälften 2, 2', welche durch den Schnitt 2d voneinander getrennt sind (Fig. 10). Zur weiteren Verarbeitung wird der vordere Teil 2' dann in Richtung P1 an das Werkstück (hier nicht gezeigt) herangeführt. Der zurückbleibende Teil des Kantenbandes 2 kann unter Umständen (je nach Auftrag der Steuerung) gegebenenfalls einem weiteren Bearbeitungsschritt unterzogen werden.

### Bezugszeichenliste:

- 1: Werkstück
- 2: Kantenband
- 2': abgetrennter Teil von 2
- 2a: Teil von 2
- 2b: Teil von 2
- 2c: Materialschwächung in 2
- 2d: Trennschnitt in 2
- 3: Kantenbearbeitungsvorrichtung
- 4: Sägeeinrichtung
- 41: Sägeblattanordnung
- 41a: erstes Sägeblatt von 41
- 41b: zweites Sägeblatt von 41
- 42: Klemmelement
- 43: Sägeunterlage
- 44: Vertiefung in 43
- 45a: Öffnung in 42
- 45b: Öffnung in 42
- 46: Schlitten
- 46a: Führung von 46
- 46b: Führung von 46
- 46c: Endanschlag von 46
- 46d: Endanschlag von 46
- 46e: Kupplung von 46
- 47: Träger von 41a, 41b
- 47a: Kupplung von 41a
- 47b: Kupplung von 41b
- 48: Antrieb für 41a, 41b
- 49: Antrieb von 46
- 50: Antrieb von 47
- 5: Haftmittelauftrags- oder aktivierungseinrichtung
- 6: Träger
- 7: Andruckeinrichtung
- 8: Kantenbandführung
- 9: Kantenbandführung
- 10: Steuerung

- A: Innenecke von 1
- C: Blickrichtung auf 41
- D1: Drehachse von 47
- D2: Drehachse von 41a
- D3: Drehachse von 41b
- Pl: Transportrichtung von 2 und 42
- P2: Bewegungsrichtung von 46
- P3: Drehrichtung von 47
- X: Erstreckungsrichtung einer Schmalseite von 1
- Y: Richtung senkrecht zu X
- Z: Richtung senkrecht zu Y und Y

## Patentansprüche

1. Sägeeinrichtung (4), aufweisend wenigstens ein erstes Sägeblatt (41a) und ein zweites Sägeblatt (41b), welche auf einem gemeinsamen, verlagerbaren, insbesondere verschieblichen und/oder drehbaren, Träger (47) gelagert sind, wobei die Sägeeinrichtung einen Sägeblattantrieb (48) aufweist, der durch Verlagern des gemeinsamen Trägers (42), bevorzugt über eine zwischengeschaltete Kupplungsanordnung (46e; 47a, 47b), wahlweise mit dem ersten Sägeblatt (41a) oder dem zweiten Sägeblatt (41b) koppelbar ist.

2. Sägeeinrichtung (4) nach Anspruch 1,
**dadurch gekennzeichnet,**
**dass** die Kupplungsanordnung (46e; 47a, 47b) eine Magnetkupplung umfasst.

3. Sägeeinrichtung (4) nach einem der vorigen Ansprüche,
**dadurch gekennzeichnet,**
**dass** sie einen Verlagerungsantrieb (50), insbesondere Servoantrieb, zur Verlagerung, insbesondere Drehung um eine erste Drehachse (D1), des gemeinsamen Trägers (42) aufweist.

4. Sägeeinrichtung (4) nach einem der vorigen Ansprüche,
**dadurch gekennzeichnet,**
**dass** der gemeinsame Träger (47) auf einem entlang einer Führung (46a, 46b) verschieblich geführten Schlitten (46), insbesondere verlagerbar, angeordnet ist.

5. Sägeeinrichtung (4) nach Anspruch 4,
**dadurch gekennzeichnet,**
**dass** der Sägeblattantrieb (48) an dem Schlitten (46) angeordnet ist.

6. Sägeeinrichtung (4) nach einem der Ansprüche 4 oder 5,
**dadurch gekennzeichnet,**
**dass** sie einen Schlittenantrieb (49) zur Verschiebung des Schlittens (46) umfasst.

7. Sägeeinrichtung (4) nach einem der Ansprüche 4 bis 6,
**dadurch gekennzeichnet,**
**dass** die Führung (46a, 46b) durch wenigstens einen Endanschlag (46c, 46d) für den Schlitten (46) begrenzt ist.

8. Sägeeinrichtung (4) nach einem der vorigen Ansprüche,
**dadurch gekennzeichnet,**
**dass** das erste Sägeblatt (41a) um eine zweite Drehachse (D2) und das zweite Sägeblatt (41b) um eine dritte Drehachse (D3) drehbar sind.

9. Sägeeinrichtung nach Anspruch 3 und 8 und ggf. einem der Ansprüche 4 bis 7,
**dadurch gekennzeichnet,**
**dass** die Drehachsen (D1, D2, D3) der Sägeblätter (41a, 41b) und des Trägers (46) parallel zueinander verlaufen.

10. Sägeeinrichtung nach Anspruch 8 oder 9,
**dadurch gekennzeichnet,**
**dass** die Ebenen der Sägeblätter (41a, 41b) in Richtung ihrer Drehachsen (D2, D3) bündig liegen oder zueinander versetzt sind.

11. Sägeeinrichtung nach einem der Ansprüche 1 bis 10,
**dadurch gekennzeichnet,**
**dass** die Verlagerung des gemeinsamen Trägers (46) zugleich die Kopplung des Sägeblattantriebs (47) mit dem jeweils in einer Gebrauchsposition befindlichen Sägeblatt (41a, 41b) bewirkt.

12. Sägeeinrichtung nach einem der Ansprüche 1 bis 10 oder 12,
**dadurch gekennzeichnet,**
**dass** das erste Sägeblatt (41a) zum vollständigen Durchtrennen eines Kantenbandes (2) und das zweite Sägeblatt (41b) zum Einschneiden des Kantenbandes (2) bis auf eine vorgegebene Tiefe ausgelegt ist.

13. Kantenbearbeitungsvorrichtung (3) zum Bearbeiten von Kantenbändern (2) mit einer Steuerung (10) sowie einer Andruckeinrichtung (7) zum Andrücken eines Kantenbandes (2) an die Schmalseite eines Werkstücks (1), wobei die Kantenbearbeitungsvorrichtung (3) eine Kantenbandführung (8, 9) und weiter eine Sägeeinrichtung (4) nach einem der vorigen Ansprüche aufweist, welche vor der Andruckeinrichtung (7) angeordnet und so durch eine Steuerung (10) ansteuerbar ist, dass sie das Kantenband (2) wahlweise bis auf eine vorgegebene Tiefe einschneiden oder vollständig durchtrennen kann.

14. Verfahren zum Bearbeiten eines Kantenbandes (2) mittels einer Sägeeinrichtung (4) nach einem der Ansprüche 1 bis 12, insbesondere mittels einer Kantenbearbeitungsvorrichtung nach Anspruch 13, umfassend die Schritte:
- Bereitstellen eines Kantenbandes (2),
- Bereitstellen eines Werkstücks (1) mit einer mit dem Kantenband (2) zu beschichtenden Schmalseite,
- Zuführen des Kantenbandes (2) und des Werkstücks (1) zu der Kantenbearbeitungsvorrichtung (3),
- Entscheiden durch eine Steuerung (10), ob eine Bekantung einer Innenecke (A), einer Außenecke (B) oder ein Stoßschnitt ausgeführt werden soll,
- Auswählen eines ersten Sägeblatts (41a) oder eines zweiten Sägeblatts (41b) in Abhängigkeit von der vorgesehenen Bearbeitung,
- Verlagern eines gemeinsamen Trägers (46), auf dem das erste Sägeblatt (41a) und das zweite Sägeblatt (41b) angeordnet sind, sodass das ausgewählte Sägeblatt (41a, 41b) in eine Gebrauchsstellung gelangt,
- und Einschneiden oder Durchtrennen des Kantenbandes (2) mittels des ausgewählten Sägeblatts (41a, 41b).

15. Verfahren nach Anspruch 14,
**dadurch gekennzeichnet,**
**dass** für die Bekantung der Außenecke (B) oder für die Durchführung eines Stoßschnitts das erste Sägeblatt (41a) ausgewählt wird und für die Bekantung der Innenecke (A) das zweite Sägeblatt (41b) ausgewählt wird.
